# EUROPEAN PATENT APPLICATION

(11) **EP 3 905 262 A2**
(43) Date of publication of application: **03.11.2021**
(21) Application number: 19902850.7
(22) Date of filing: 25.12.2019
(51) Int. Cl.: G21C 9/016

(54) **MELT CONFINEMENT DEVICE**

(30) Priority: 26.12.2018 RU 2018146642
(71) Applicant: Joint Stock Company "Atomenergoproekt", Moscow, 107996 (RU); Science and Innovations - Nuclear Industry Scientific Development, Private Enterprise, Moscow, 119017 (RU)
(72) Inventor: SIDOROV, Aleksandr Stalevich, Moscow, 115612 (RU); DZBANOVSKAYA, Tatyana Yaropolkovna, Moscow, 107113 (RU); SIDOROVA, Nadezhda Vasilievna, Moscow, 115612 (RU)
(74) Representative: Friese Goeden Patentanwälte PartGmbB
(86) International application number: PCT/RU2019/001015
(87) International publication number: WO 2020/139160

(57) **Abstract**

The invention relates to the field of nuclear energy, in particular, to systems that ensure the safety of nuclear power plants (NPP), and can be used in severe accidents that lead to reactor pressure vessel and its containment destruction.

The technical result of the claimed invention is to increase the safety of a nuclear power plant by excluding the release of liquid and solid radioactive materials (corium) outside the device for confining core melt in the event of a severe accident with the core melt discharge out of the nuclear reactor.

The object of the current invention is to improve the efficiency and reliability of the the device for confining core melt by improving the corium cooling conditions.

The set object is solved based on the use of the filler formed in the cassettes, the upper and the lower ones. The cassettes have vertical and horizontal channels that ensure uniform distribution of the melt in the cooled body.

## Description

### Technical field of the invention

The invention relates to the field of nuclear energy, in particular, to systems that ensure the safety of nuclear power plants (NPP), and can be used in severe accidents that lead to reactor pressure vessel and its containment destruction.

The greatest radiation hazard is represented by accidents with core meltdown, which can occur in various failures of the core cooling systems.

In case of such accidents occurrence, the core meltdown - corium, melting the core internals and the reactor vessel, flows out of it and, due to the residual heat generation remaining in it, can violate the integrity of the NPP containment - the last barrier to the release of radioactive products into the environment.

To eliminate this, it is necessary to confine the core melt that has flowed out of the reactor vessel (corium) and ensure its continuous cooling, until the complete crystallization. This function is performed by the water-cooled reactor core melt cooling and confinement system, which prevents damage to the NPP containment and, thereby, protects the population and the environment from radiation exposure in severe accidents of nuclear reactors.

### Prior art

The water-cooled water-moderated emergency nuclear reactor corium cooling and confinement device [1], comprising the cooled trap located at the under-vessel space, protective truss located in the reactor vessel bottom, and the bearer located at the top of the pit above the trap; the sacrificial materials-diluents of uranium-containing oxide and steel components of corium melt formed in the cassette, that are made in blocks, are placed in the trap, is already known.

The drawback of the current device lies in insufficiently effective cooling of the melt related to a split (cellular) installation of ceramic elements, in which, when the corium melt destroys the steel frame, ceramic elements, as the lighter ones, float in the corium melt and, practically, do not interact with its oxide component, passing into slag, which can lead to the release of liquid and solid radioactive materials (corium) outside the device for confining core melt.

The water-cooled water-moderated nuclear reactor corium cooling and confinement device [2], located in the under-vessel of the concrete pit, including water-cooled body represented as a vessel, the bottom of which deepened to the center with a slope of 10-20 degrees, and the thickness of the bottom is not less than 30% greater than the thickness of the body side wall; thus the body located in the material-diluent pellets of the oxide uranium-containing corium, associated with cement mortar and placed in steel blocks arranged in several horizontal layers, the bottom of the lower block was identical in form to the vessel bottom, located above it, the blocks have a central hole, and the attachment fittings for blocks to the body and between them is placed in the vertical slots of the blocks and slots and the blocks are partly filled with concrete, is already known.

The drawback of the current device lies in insufficiently effective cooling of the melt related to a split (cellular) installation of ceramic elements, in which, when the corium melt destroys the steel frame, ceramic elements, as the lighter ones, float in the corium melt and, practically, do not interact with its oxide component, passing into slag, which can lead to the release of liquid and solid radioactive materials (corium) outside the device for confining core melt.

The most likely to the claimed invention is a the device for confining core melt [3], which includes a cooled body with a double wall filled with a sealant arranged in blocks, each of which is divided into segments by attachment fittings installed radially relative to the vertical axis of the device, while filling the segments with filler is carried out with the formation of free zones communicating with the central through hole for the melt passage.

The drawback of the current device lies in insufficiently effective cooling of the melt related to a split (cellular) installation of ceramic elements, in which, when the corium melt destroys the steel frame, ceramic elements, as the lighter ones, float in the corium melt and, practically, do not interact with its oxide component, passing into slag, which can lead to the release of liquid and solid radioactive materials (corium) outside the device for confining core melt.

### Disclosure of the invention

The technical result of the claimed invention is to increase the safety of a nuclear power plant by excluding the release of liquid and solid radioactive materials (corium) outside the device for confining core melt in the event of a severe accident with the core melt discharge out of the nuclear reactor.

The object of the current invention is to improve the efficiency and reliability of the the device for confining core melt by improving the corium cooling conditions.

The set object is solved due to the fact that the device for confining core melt, comprising a cooled body with a double wall, the bottom of which deepened to the center with a slope, filled with a sealant, guiding element for the melt moving control, the passive system of water supply to the melt surface, according to the invention, the filler consists of several upper and lower cassettes, each of which is made of one central and several peripheral vertical storage channels, the diameter of the central vertical storage channel exceeds a diameter equal to the vertical peripheral storage channels; the horizontal radial distributary channels, connecting vertical peripheral storage channels with the central vertical storage channel, while the lower cassette horizontal radial distributary channels are made with a slope, the angle of which coincides with the slope of the melt trap body bottom, horizontal azimuth distributary channels, connecting the upper cassette vertical peripheral storage channels with each other; thus the horizontal radial and azimuth distributary channels have equal diameters, the upper and lower cassettes comprise ceramic plates made with microchannels separated by horizontal and vertical conduits, and are mounted on each other so that the vertical loops of their central and peripheral storage channels coincide with each other.

Additionally, each peripheral vertical storage channel of the device for confining core melt is located on the same axial axis with the corresponding radial fin of the cooled body.

In addition, the depth of the central vertical channel exceeds the depth of the peripheral vertical storage channels.

Additionally, the damper is installed in the central vertical storage channel, consisting of the central mantle, bearing ribs connected to the central mantle, the tilted plates located between the bearing ribs, and clamps that secure the damper to the cooled body.

One characteristic feature of the claimed invention is that the filler consists of several upper and lower cassettes, each of which is made of one central and several peripheral vertical storge channels; the central vertical channel diameter exceeds the diameter equal to the vertical peripheral storage channels; the horizontal radial distributary channels, connecting vertical peripheral storage channels with the central vertical storage channel, while the lower cassette horizontal radial distributary channels are made with a slope, the angle of which coincides with the slope of the melt trap body bottom, horizontal azimuth distributary channels, connecting the upper cassette vertical peripheral storage channels with each other; thus the horizontal radial and azimuth distributary channels have equal diameters, the upper and lower cassettes comprise ceramic plates made with microchannels separated by horizontal and vertical conduits, and are mounted on each other so that the vertical loops of their central and peripheral storage channels coincide with each other.

Another distinguishing feature of the claimed invention is that each peripheral vertical storage channel of the device for confining core melt is located on the same axial axis with the corresponding radial fin of the cooled body.

One more distinguishing feature of the claimed invention is that the depth of the central vertical storage channel exceeds the depth of the peripheral vertical storage channels.

Another distinguishing feature of the claimed invention is that the damper is installed in the central vertical storage channel, consisting of the central mantle, bearing ribs connected to the central mantle, the tilted plates located between the bearing ribs, and clamps that secure the damper to the cooled body.

Such a filler structure ensures efficient distribution of the core melt inside the cooled body due to the following components:
- the central and peripheral vertical storage channels provide simultaneous reception of the core melt large masses, as well as the distribution of the melt over the whole filler volume when individual storage channels overflow, which usually occurs when the core melt flows out of the reactor vessel in a non-axisymmetric manner;
- the central and peripheral vertical storage channels protect the above structures from thermal radiation from superheated steel at the initial stage of the core melt entering the filler from the reactor vessel, since they do not allow direct thermal radiation to heat the trap body upper part (practically, they block a direct radiation streaming), and provide heat preservation in the liquid steel that entered the filler during the two-staged process of core melt outflow from the reactor vessel, in which at the initial stage of the reactor vessel destruction, mainly superheated steel with a small amount of liquid oxides out of it, then, within 30 minutes to 3-4 hours, out of the reactor vessel, the main volume of liquid oxides comprising a certain amount of liquid reactor vessel steel, flows out;
- the central and peripheral vertical storage channels provide effective conditions for ensuring the operability of the conduits in full, since the vertical arrangement of the storage channels provides a predominantly vertical interface when the core melt comes into contact with the ceramic elements, and the resulting water vapor is evacuated through the conduits, slightly interacting with the core melt;
- the horizontal radial and azimuth distributary channels provide a connection between the central and peripheral vertical storage channels, and, consequently, azimuth redistribution of the melt between them, which makes it possible to effectively equalize the melt level between the vertical storage channels with non-axisymmetric flow of the core melt from the reactor vessel, preventing overflow of the melt through their edges. Additionally, these horizontal distributary channels help to avoid overflow of individual vertical storage channels, to ensure that the mass of the incoming melt coming with the volume of the filler, thereby equalizing the thermomechanical load on the filler, and, ultimately, to ensure uniform heating of the melt trap body along the entire perimeter and height.
- the horizontal radial and azimuth distributary channels, providing a single level of melt in the filler, make it possible to fully use the advantages of such a structure, namely, the low level of melt in the storage channels helps applying the filler as a passive protection against the thermal radiation effects on the design components of the melt trap, truss-bearer and guide plate at the early stages of the core melt outflow from the reactor vessel. For example, in the two-staged process of the melt entering, the melt of liquid metals, flowing out of the reactor vessel in a peak mode, is completely located in the lower part of the filler, not being able to form a single open radiating surface;
- the conduits separating the filler ceramic elements are initially sealed with a binder that ensures the filler cassette non-porosity. During the heating of the melt and the filler contact area, the process of physical and chemical interaction begins at the contact boundary, while the binder, as the temperature increases, begins to deteriorate, losing water. The vapor released from the decomposing binder moves mainly along the vertical peripheral conduits, bypassing the areas blocked by the melt. Only in those places where the melt fills the conduits from above, the vapor passes through the thickness of the melt, entering into interreaction with it. As a result, the more branched the structure of the conduits, the easier it is for the vapor to bypass the melt without interacting with it;
- the microchannels located within the ceramic elements are formed by sintering to provide the desired kinetics of interaction with the core melt.

### Brief description of drawings

Fig.1 shows the general view of the device for confining core melt with a filler made in accordance with the claimed invention.
Fig.2 shows a cross-section view of the filler, in which the vertical central and peripheral storage channels are made, as well as the horizontal radial and azimuth distributary channels.
Fig.3 shows an enlarged view of the filler, in which the conduits and microchannels are completed.
Fig.4 shows the damper general view.

### Embodiments of the invention

The alleged invention is functioning as follows.

The claimed device for confining core melt (hereinafter referred to as DCCM) is a crucible-type device located in the concrete pit under-vessel space.

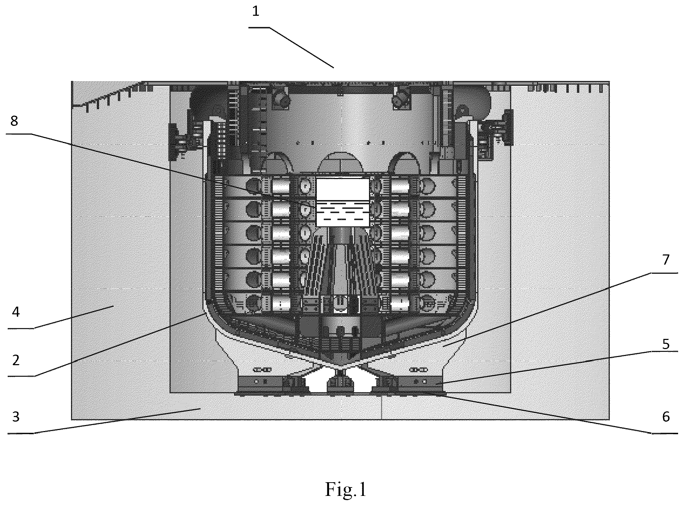

As it is shown on Fig.1, the device for confining core melt (1) comprises the cooled body (2), which is a steel multi-layer vessel installed on a support fixed on a concrete plate (3) of the pit (4).

The DCCM support (1), in turn, is made in the form of several radial supports (5) connected to the embedded plate (6) installed in the concrete plate (3) of the pit (4) by means of various fixing devices (for example, studs, bolts, pins). The counter ribs (7) are mounted on the radial fins (5) of the body (2) of DCCM (1), wherein a vertical plane passing along the axis of symmetry of each fin (5) of the support and counter ribs (7) of the body (2) of DCCM (1) are the planes of symmetry of the peripheral vertical storage channels.

The body (2) is designed to receive and place the corium melt (8) in its volume, as well as to prevent it from going beyond the established boundaries of the confinement area.

Corium consists of two main components: oxide (the main components of which is the mixture of uranium, zirconium, iron oxides with a small amount of metals) and metal (the main components of which are a mixture of iron, zirconium with a certain amount of uranium, zirconium, iron oxides).

The body (2) is sealed with a filler, namely a sacrificial material made of a composition of steel and relatively light and low-melting oxides, which, in accordance with the claimed invention, are made in the form of elements arranged in cassettes mounted on each other along the vertical axis of the body (2).

In the event of the beyond-the-design basis accident, the filler provides corium subcriticality within the established boundaries of the confinement area for any configuration of oxide corium and any water-to-water ratio with pure non-borated water.

To ensure corium subcriticality, the filler comprises absorbing materials that co-crystallize with uranium and plutonium oxides.

Sacrificial ceramic materials based on iron oxide Fe₂O₃ (hematite) and aluminum oxide Al₂O₃ may be used to change the corium properties in the DCCM.

Hematite reactive with the oxide part of corium and molten zirconium from its metal component, but slowly with molten iron and chromium from the metal component of corium.

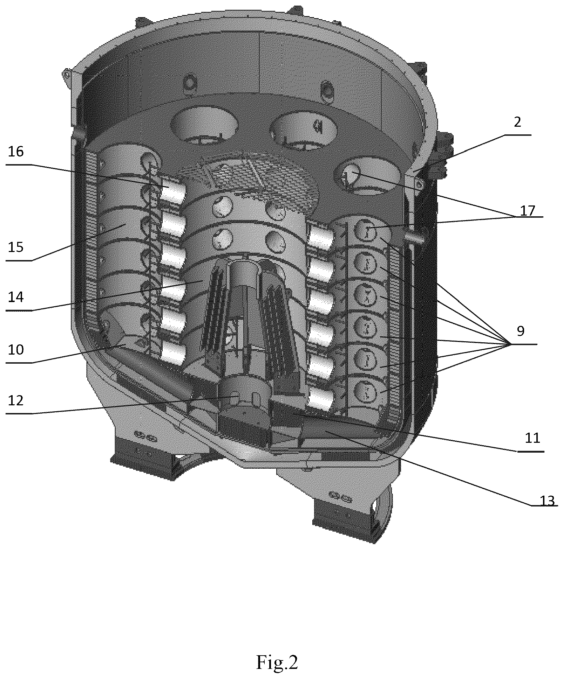

As shown in Fig.2, the filler cassettes are divided into two groups according to the shape of the peripheral storage channels: the upper cassettes (9), which differ in body height profiling from each other (for example, cylindrical and torus cassettes), and the lower cassette (10).

The body (2) is made with internal radial supports (11), on which the lower filler cassette (10) is installed.

The lower cassette (10) has a vertical central storage channel (12) and several peripheral storage channels (13).

The peripheral storage channels (13) are made with a slope, the angle of which coincides with the angle of the melt trap bottom body (2).

Upper cassettes (9) are installed on the lower cassette (10). Each filler upper cassette (9) has a vertical central storage channel (14) and several vertical peripheral storage channels (15). The vertical central and peripheral storage channels (14, 15) are connected to each other by the horizontal radial distributary channels (16).

In addition, the upper cassettes (9) have horizontal azimuth distributary channels (17) connecting the vertical peripheral storage channels (15) with the vertical central storage channel (14).

The diameter of the vertical central storage channel (14) exceeds the diameter of the vertical peripheral storage channels (15).

The vertical central storage channels (14) and the peripheral storage channels (15) for each of the upper cassettes (9) have the same dimensions, respectively. The horizontal radial and azimuth distributary channels (16, 17) of the upper cassettes (9) also have the same dimensions.

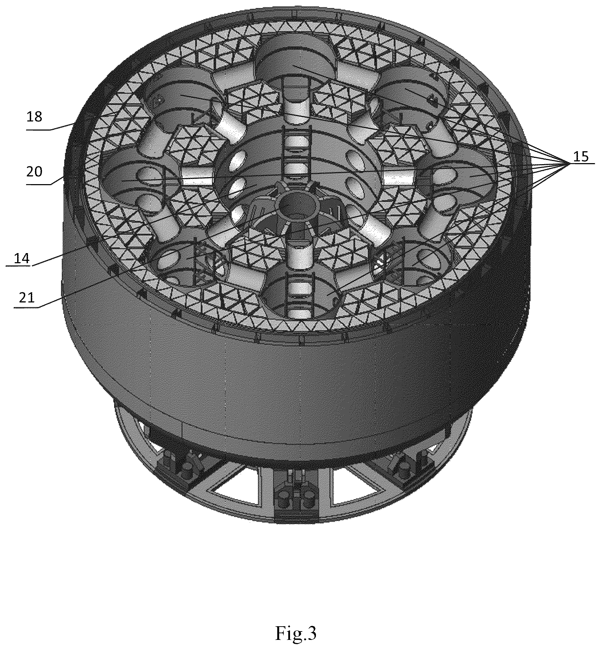

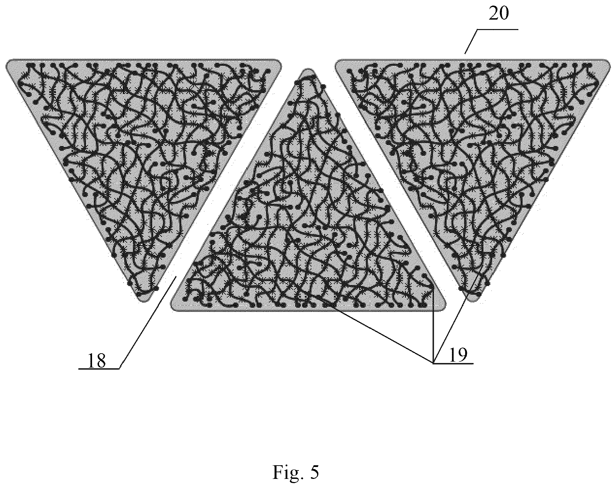

Fig.3 and Fig. 5 shows a filler in which the conduits (18) and microchannels (19) are completed. The conduits (18) separating the filler ceramic elements (20)are initially sealed with a binder that ensures the filler cassettes non-porosity. During the heating of the melt and the filler contact area, the process of physical and chemical interaction begins at the contact boundary, while the binder, as the temperature increases, begins to deteriorate, losing water. The vapor released from the decomposing binder moves mainly along the vertical peripheral conduits (18), bypassing the areas blocked by the melt (8). Only in those places where the melt (8) fills the conduits (18) from above, the vapor passes through the thickness of the melt (8), entering into interreaction with it. As a result, the more branched the structure of the conduits (18), the easier it is for the vapor to bypass the melt (8) without interacting with it. The microchannels (19) positioned inside the ceramic elements (20) formed during sintering ensure the set kinetics of interaction with the core melt (8), that is, define the interaction rate of the melt (8) with hematite and aluminum oxide at the boundary of the ceramic element (20), which ultimately determines the energy balance of the corium molten bath, the rate of zirconium oxidation, and the output of unreacted oxygen into the corium molten bath.

The cassettes (9, 10) are mounted on each other in such a way that, in fact, they form a monolithic structure in which the storage channels (14, 15) of each cassette (9, 10), after composing the cassettes (9, 10) on the top of each other, form a kind of "wells" into which the core melt (8) flows after entering the DCCM (1).

The damper (21) is installed inside the central vertical storage channel (14), which is designed to distribute the melt flows (8) in various radial directions.

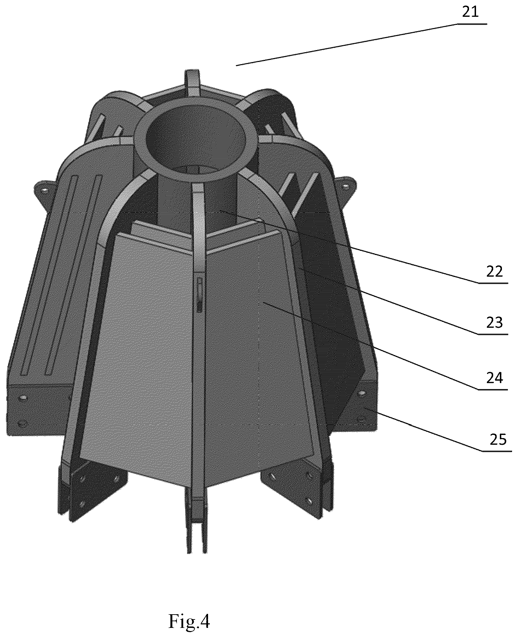

The damper (21) shown on Fig. 4 consists of the central mantle (22), bearing ribs (23) connected to the central mantle (22), the tilted plates (24) located between the bearing ribs (23), and clamps (25) that secure the damper (21) to the DCCM (1) body.

The tilted plates (24) of the damper (21) located between the bearing ribs (23) are installed from 1 to 5 pieces, parallel to each other in each segment between the bearing ribs (23). The number of the tilted plates (24) more than 5 does not give an additional redistributing effect due to the fact that the thickness of the tilted plates (24) shall be reduced to ensure the desired angle of the plates (24) tilt, which ensures the deflection of the core melt superheated jets towards the filler.

The number of the radial supports (11) inside the DCCM (1) body (2) is set in the range from 3 to 10 pieces. The number of the radial supports (11) that equals less than 3 does not provide effective work to absorb the kinetic impact energy, since in this case the impact area is not redistributed along the body (2) bottom, but is concentrated in its local areas, which may lead to its destruction. The number of radial supports (11) that equals more than 10 does not increase redistributive effect, requires reducing the bearing ribs (23) thickness, which negatively affects their ability to absorb and redistribute kinetic impact energy caused by the reactor vessel bottom debris falling and to absorb the energy of the core melt jets during the melt blowdown out of the reactor vessel.

During the multiple flux of the melt (8) from the reactor vessel into the filler with the installed damper (21), a hydro-mechanical redistribution of the melt (8) between the cassettes (9, 10) and their parts is provided, and protection is also provided from the direct impact of superheated jets of the core melt on the basement of the lower cassette (10) and the conical part of the ULR (1) body (2). Destructing and melting during the core melt blowdown from the reactor vessel, the damper (21) redistributes the kinetic energy of the melt between the upper and the lower cassettes (9,10). Energy redistribution occurs when a large volume of melt (8) containing mainly liquid superheated steel enters the first peak discharge due to the hydro-mechanical deflection of the molten metal by the damper (21) planes towards the horizontal radial distributary channels (16), which, in turn, ensure the redistribution of the melt (8) between the vertical storage channels (14, 15).

The orientation and angle of the plates (24) slope of the damper (21) are selected so that the melt jets are deflected from the central one towards the end surfaces of the upper cassettes, through which the horizontal radial and azimuth distributary channels (16, 17) pass through.

For example, when 60 tons of superheated steel are delivered in a peak discharge for 30 seconds, the damper (21) survivability is about 10 seconds, but this time is sufficient to limit the first shock discharge of molten superheated steel into the lower cassette (10) until a safe melt level is formed above it and redirect part of the kinetic energy of the melt to the upper cassette (9), from which the melt increases its level above the lower cassette (10), protecting it from subsequent direct impact kinetic energy of melt jets and flying objects.

During the superheated steel peak discharge, when the melt jets fall in the axisymmetric or non-axisymmetric way, the filler is partially sealed and it enters not only the central vertical storage channel (14), but also the peripheral vertical storage channels (15) of the upper cassettes (10). In this case, the damper (21) performs the function of a hydrodynamic damper, providing a directional collision of the melt jets, horizontally flowing from the peripheral vertical storage channels (15) into the vertical central storage channel (14) through the horizontal radial distributary channels (16), with vertical melt jets moving in the vertical central storage channel (14) and deflected tilted plates (24) of the damper (21) in the radial direction towards the horizontal radial distributary channels (16).

The lower cassette (10) in the process of the melt peak discharge is essential: together with the damper (21), it protects the body (2) bottom of the DCCM (1), the damper (21) protects it at the initial moment of the melt flux, and the lower cassette (10) performs this function after the destruction of the damper (21), due to the special shape at the peripheral vertical storage channels (13). The central and peripheral vertical storage channels (12, 13) of the lower cassette (10) are made in such a way that the corium melt entering the peripheral vertical storage channels (13) of the lower cassette (10) from the cassettes located above (9) flows down the inclined peripheral storage channels (13) of the lower cassette (10) into its central vertical storage channel (12), forming a melt level above the ceramic elements (20) of the lower cassette (10) located at its basement. The thickness of the installed ceramic elements (20) located at the basement and on the lateral conical surface of the lower cassette (10) are designed to provide pre-heating of the DCCM (1) body (2) conical bottom, having a greater thickness than the cylindrical section, for alignment of the DCCM (1) body (2) temperature fields at the time of flowing in the filler oxide (energy-releasing) part of the corium melt. The inclined peripheral vertical storage channels (13) of the lower cassette (10) provide uniform heating of the conical part of the DCCM (1) body (2) bottom and the DCCM (1) body (2) basement is heated from the basement of the central vertical storage channel (12) of the lower cassette (10), for which it is performed somewhat deeper than are located around the peripheral inclined vertical storage channels (13).

The melt (8) level formed in the central vertical storage channel (12) of the lower cassette (10), protects the basement of the lower cassette (10) and bevel the DCCM (1) body (2) conical bottom from the shock of impact by fragments of the active zone and the debris of the reactor vessel bottom, the falling of which under different configuration of the central channel of the filler could cause damage to the thermal protection of the DCCM (1) body (2) conical bottom, ensured by the ceramic elements (20) of the lower cassette (10) and the conical bottom.

The use of the ceramic elements (20) instead of concrete at the basement of the lower cassette (10) to protect the DCCM (1) body (2) conical bottom has the following advantages: the filler becomes uniform. In this case, the processes of interaction of the melt with the filler elements that occur under different conditions are excluded: the melt - ceramic elements on a concrete binder and the melt - monolithic concrete. In the latter case, the DCCM (1) body (2) conical bottom heating cannot be synchronized with the body (2) cylindrical and toros parts heating, thus, increased risk of local thermal-shock impact of melt on the DCCM (1) body (2) with the possible loss of strength due to different thermomechanical loadings of the body (2): from the bottom side, the heat transfer is blocked by concrete, and from the side of the torus and cylindrical parts of the DCCM (1) body (2), the heating process is determined by the rate of interaction of the ceramic elements (20) with the core melt, that is, the microporosity of ceramic elements (20) and the processes taking place in the conduits (19). Taking into the account that the thickness of the toros conical and cylindrical parts of the DCCM (1) body (2) are different, a problem of alignment of the temperature fields of the DCCM (1) body (2) is crucial in the process of preserving the body strength and resistance to the other types of impacts.

The exclusion of concrete from the lower cassette (10) gives another positive effect: the decrease in the hydrogen and aerosols yield when the core melt interacts with concrete.

Thus, the use of the filler performed in accordance with the claimed invention in the form of a monolithic structure having the vertical central and peripheral channels, as well as horizontal channels formed by the vertical central and peripheral storage channels and the horizontal distributary channels in cassettes mounted on each other, made it possible to increase the reliability of the device for confining core melt by ensuring the distribution of energy of the reactor vessel fragments and the core melt between different types of channels in the filler, ensuring reliable protection of the melt trap body from overheating during the initial period of the peak core melt discharge from the reactor body to the melt trap body, which, in turn, gives the opportunity to minimize the hydrogen production when the melt interacts with the vapor in the filler at the melt interaction with the binder.

Information source:
1. RF Patent No. 35464, IPC G21C9 / 016, priority dated August 18, 2013.;
2. RF Patent No. 2514419, IPC G21C9 / 016, priority dated June 6, 2012.;
3. RF Patent No. 100327, IPC G21C9 / 016, priority dated June 17, 2010 (prototype).

## Claims

1. A melt confinement device, comprising a cooled body with a double wall, the bottom of which deepened to the center with a slope, filled with a sealant, guiding element for the melt moving control, the passive system of water supply to the melt surface, **characterizing in that** the filler consists of several upper and lower cassettes, each of which is made of one central and several peripheral vertical storage channels, the diameter of the central vertical storage channel exceeds a diameter equal to the vertical peripheral storage channels; the horizontal radial distributary channels, connecting vertical peripheral storage channels with the central vertical storage channel, while the lower cassette horizontal radial distributary channels are made with a slope, the angle of which coincides with the slope of the melt trap body bottom, horizontal azimuth distributary channels, connecting the upper cassette vertical peripheral storage channels with each other; thus the horizontal radial and azimuth distributary channels have equal diameters, the upper and lower cassettes comprise ceramic plates made with microchannels separated by horizontal and vertical conduits, and are mounted on each other so that the vertical loops of their central and peripheral storage channels coincide with each other.

2. The melt confinement device according to the Claim 1, **characterized in that** the peripheral vertical storage channels of the upper and lower cassettes are located on the same axial axis with the corresponding radial fin of the cooled body.

3. The melt confinement device according to the Claim 1, **characterized in that** the depth of the central vertical storage channel formed by cassettes exceeds the depth of its peripheral vertical storage channels.

4. The melt confinement device according to the Claim 1, **characterized in that** the damper is installed in the central vertical storage channel, consisting of the central mantle, bearing ribs connected to the central mantle, the tilted plates located between the bearing ribs, and clamps that secure the damper to the cooled body.
